Europäisches Patentamt

(19) European Patent Office

Office européen des brevets

(11) Publication number: **0 318 742 B1**

# (12) EUROPEAN PATENT SPECIFICATION

(45) Date of publication of patent specification:
27.02.91 Bulletin 91/09

(51) Int. Cl.⁵: **F16B 45/00**

(21) Application number: 88118803.1

(22) Date of filing: 11.11.88

(54) Snaphook with locking sleeves.

(30) Priority: 30.11.87 IT 2281287

(43) Date of publication of application:
07.06.89 Bulletin 89/23

(45) Publication of the grant of the patent:
27.02.91 Bulletin 91/09

(84) Designated Contracting States:
AT CH DE ES FR GB LI

(56) References cited:
DE-A- 1 775 402
DE-A- 3 311 614
FR-A- 2 476 249
US-A- 4 401 333

(73) Proprietor: KONG S.P.A.
Via XXV Aprile No 3
I-24030 Monte Marenzo Bergamo (IT)

(72) Inventor: Bonaiti, Marco
Via Mentana No. 75
I-22053 Lecco Como (IT)

(74) Representative: Petruzzelli, Antonio
Via E. De Amicis No. 25
I-20123 Milano (IT)

Jouve, 18, rue Saint-Denis, 75001 PARIS

## Description

This invention relates to improvements to snaphooks in general, used in any sector, for example in mountaineering, for safety belts, in seafaring or for any other application in which there is a need for safety and security both when maneuvering and locking the snaphook in a closed condition.

From DE-A-1.775.402 and FR-A-2.476.249 it is known a snaphook essentially made up of a hooking element in the form of an open link, provided with a closing lever which is manually operable to open the snaphook, in accordance with the preamble of claim 1. The lever may be subject to the action of a return spring pushing it to engage with one end of said hooking element. The lever may be movable either inwards or outwards in the plane defined by the snaphook, or laterally in one or opposite direction. In many cases, for special needs and uses the snaphook is provided with a locking sleeve for the lever which can even act automatically when the lever is released. In other cases the snaphook is provided with a screw-type locking sleeve.

From US-A-4.401.333 a pelican hook is known in which the use is made of two indipendent locking systems, which require two different and indipendent movements to release the hook, preventing the use and the disengagement of the closing lever by an hand only.

Modern snaphooks having slidable locking sleeve, or a screw-type locking sleeve, do not always perform sufficiently reliably or safely in all conditions of use because under certain external forces the sleeve could disengage, so freeing the closing lever.

The object of this invention is to provide a snaphook of the kind referred to, provided with a locking system for the lever which keep the advantages of the sliding sleeve automatic locking system and which at the same time is reliable and safe under any conditions of use.

A further object of the invention is to make available a snaphook of the above mentioned type provided with a double locking system for the closing lever, adaptable to any type or form of snaphook.

The invention is therefore embodied as disclosed in claim 1. In general terms the snaphook comprises a hooking element in the form of an open link, a closing lever pivoted at one end of the above-mentioned hooking element, and locking means for the lever, said locking means comprising a spring biased locking sleeve on the lever, slidingly engaging and disengaging said hooking element. Furthermore, a second stop sleeve for said locking sleeve is coaxially provided on said lever, said stop sleeve being movable from a first operative condition in which prevent the disengagement of said locking sleeve from said hooking element, to a second operative condition in which allows the disengagement, a screw-threaded means to move said stop sleeve between said first and second operative conditions.

The locking sleeve may be positioned inside or outside of the stop sleeve, it may equally well engage with the end of the hooking element to which the closing lever is pivoted or with the opposite end, and the stop sleeve may screw both onto the same lever and onto the locking ring. The choice of whichever arrangement may vary from case to case and will depend on the specific uses of the snaphook.

The double locking sleeve device for snaphooks, according to the present invention, can be applied to any type of snaphook but, by way of example, it will be described below with reference to a ring-shaped snaphook and to the appended drawings, in which :

Fig. 1 shows a view of a snaphook comprising a first embodiment of the lever-locking device according to the present invention ;

Fig. 2 shows an enlarged detail of the snaphook in fig. 1, with the lever in closed condition ;

Fig. 3 shows a view similar to that in fig. 2 with the lever open ;

Fig.4 shows a view similar to that in fig. 2 with the lever locked ;

Fig. 5 shows a sectional view of a second embodiment of the locking device ;

Fig. 6 shows a sectional view of a third embodiment of the locking device.

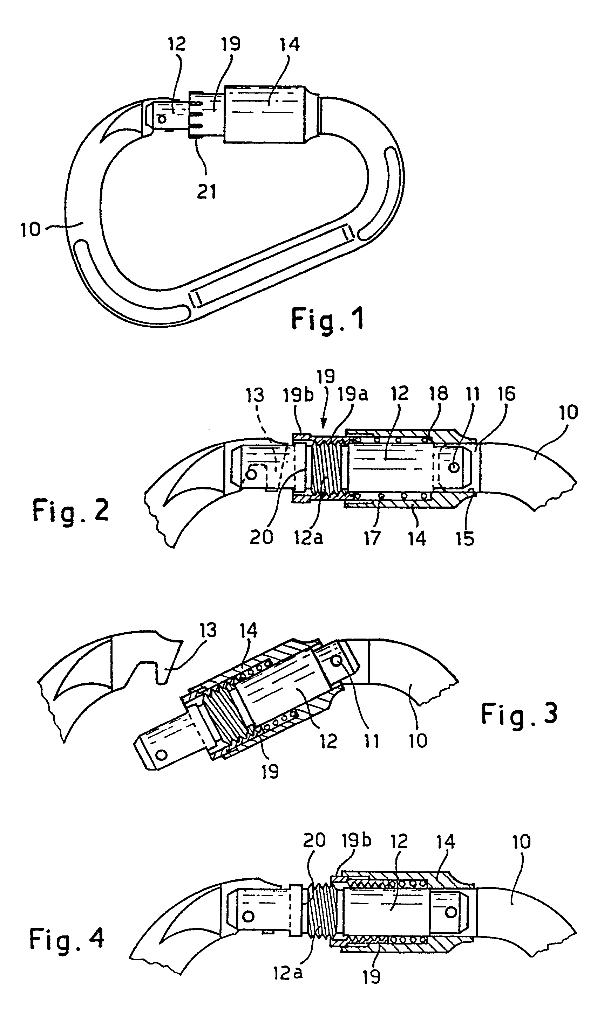

As shown in figures 1 to 4, the snaphook essentially comprises a hooking element 10, in the form of an open link member having an end 16 to which is pivoted at 11 a closing lever 12 engaging and disengaging with a tooth projection 13 at the opposite of the hooking element 10. A first locking sleeve 14 is slidingly provided on the lever 12 so as to move between a first backward position, shown (figs. 1 and 2), in which the locking sleeve 14 prevents the rotation of the lever 12, and a second advanced position (figure 3) in which the sleeve 14 is disengaged from the end 16 of the hooking element 10, thereby allowing rotation of the lever 12 so as to open the snaphook. In this connection the sleeve 14, around the hinge 11 where the lever 12 is pivoted, has an internal cylindrical hole 15 which engages with a cylindrical surface at the end 16 of the hooking element 10, and a corresponding cylindrical surface at the hinge point 11 of the closing lever 12.

A biasing spring 17 for restraining the sliding sleeve 14 and for returning the lever 12 to closed condition, is provided inside of the sleeve 14 ; this spring 17 acts on the sleeve 14 to make it slide and to hold it usually engaged with the end 16 of the hooking element, in the position of the locking lever shown in fig. 2. The biasing spring 17 on one side bears against a shoulder or ring-shaped surface 18, inside of the locking sleeve 14, while with its other end it bears against the rim or a shoulder surface at the opposite end of a second stop sleeve 19 having an internal threaded portion 19a ; in the example shown, the sleeve 19 is positioned inside the sliding or locking sleeve 14 and can screw over a threaded portion 12a of the closing lever 12.

The locking sleeve 14, the stop sleeve 19 and the closing lever 12 can be provided with suitable reciprocal stop means, to prevent one or both sleeves from interfering with the tooth-shaped end 13 of the hooking element 10. For example in the case in which neither of the two sleeves must interfere with the tooth 13 of the hooking element 10 the lever 12 can include a stop surface 20 or other equivalent means, for example an internal shoulder, which interferes with the thread of the sleeve 19 or with a surface of the latter in order to prevent the sleeve 19 from screwing or unscrewing beyond a certain position. Correspondingly, to prevent the external sleeve 14 from sliding and advancing beyond a set position, beyond which it would interfere with the tooth 13 thereby preventing the lever 12 from rotating, the external sleeve 14 and the internal sleeve 19 can be provided with reciprocal stop means ; in the case described, stopping of the forward movement of the sliding sleeve 14, with respect to the sleeve 19, can be effected by closely bunching up the coils of the return spring 17, providing and appropriate length and stroke for the sleeve 14 ; other solution 1 may be used.

If it is desirable to lock the lever 12 also with the inner sleeve 19, the latter can have a bell-shaped end, sufficiently large to partially overlap the tooth-shaped end 13 of the hooking element 10 so eliminating the stop surface 20 on the lever 12.

In addition to previously described functions, the sleeve 19 performs the primary function of locking the sliding ring 14 in the backward position, so as to thereby prevent disengagement by the lever 12 from the retaining tooth 13. This can be accomplished, as shown in fig. 4, by screwing or by moving the sleeve 19 fully backwards into the sleeve 14 so bunching up the spring 17, or by bringing into contact the respective stop surfaces so as to hold the cylindrical surface 15 of the sleeve 14 overlapping the pivot 11 of the lever 12 against the cylindrical stop surface at the end 16 of the hooking element 10.

The use of the snaphook is briefly described as follows : the state of the two sleeves 14 and 19 as shown in figures 1 and 2 is such that the outer sleeve or locking sleeve 14 is free to slide forward, along the lever 12 and onto the inner or stop sleeve 19, so reaching the state shown in fig. 3 in which it leaves the lever 12 free to rotate. As such the snaphook may be opened for hooking up or unhooking, or for inserting or withdrawing a rope or other element. This operation can be easily performed using a finger to advance the sliding sleeve 14 and at the same time to push sideways, or to rotate, the lever 12. When released, the lever 12 will, under the action of a return spring (not shown) or through the action of the same spring 17 that pushes the sliding sleeve 14 towards the end 16 of the hooking element 10, automatically revert to the closed position of fig. 2 and the biasing spring 17 will at the same time automatically return the sliding sleeve 14 to the locking condition shown in figure 2. When it is desirable to prevent the forward sliding movement of the ring 14 and thereby prevent the snaphook lever 12 from opening, the sleeve 19 simply has to be screwed or moved backwards until it causes the spring 17 to bunch or until it brings an annular shoulder up against the front rim of the sleeve 14, which will prevent the sleeve 14 from advancing, even if pushed. In this way an additional locking system is obtained that makes the snaphook extremely safe and reliable in use.

In order to facilitate the screwing of the inner sleeve 19, the latter may be provided with a knurled front portion or contoured with ribs or projections 21 that engage with the widened inside front end of the locking sleeve 14 so as to allow easy operation with the latter for screwing the inner sleeve 19 in both directions.

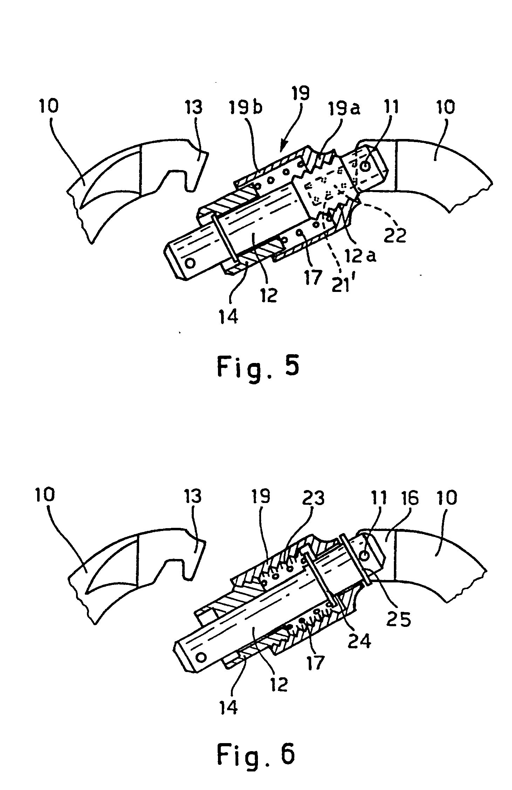

Figures 2, 3 and 4 show the case in which the sliding locking sleeve 14 of the snaphook lever, engages with the end 16 of the hook element relating to the hinge 11 for the lever ; additionally in these figures, the sliding sleeve 14 is shown on the outside of the stop sleeve 19. The following figure 5 instead shows a second arrangement in which the sliding sleeve 14 engages with the end 13 of the hooking element 10 that is opposite the one for pivoting the lever 12 ; the sliding sleeve 14 is now inside the stop sleeve 19, and the latter has an inner threaded rear portion 19a that screws onto the threaded section 12a of the lever 12, and a cylindrical portion 19b that is positioned coaxially about and over the sliding sleeve 14. A spring 17 is still disposed between the two sleeves 14 and 19, inside the outer sleeve and its action pushes the sliding sleeve from a disengaged condition to an engaged condition with the hooking element 10. In this case the snaphook lever 12 can be provided with an additional elastic system, for example a spring 21' located in an axial seating 22 whose action automatically returns the lever 12 to the state closing the snaphook.

Finally, fig. 6 of the drawings shows a third arrangement in which the outer sleeve 19 has an inner thread that screws onto an outer thread portion 23 of the sliding sleeve 14 ; in this case both the sleeves in effect slide along the snaphook lever 12 and the two sleeves can be brought together by screwing so that the first sleeve 14 is able to engage with and disengage from one of the ends of the previously stated hooking element 10, the sleeve 14 being subject to the pushing action of a thrust spring 17, held in place by an annular shoulder of the lever 12, or by a split washer 24 housed in an appropriate seating or other equivalent means. In this case flat guide surfaces between the sliding sleeve and the lever or other equivalent means could be provided which, when the outer sleeve 19 is screwed to bring it together with the sliding sleeve 14, prevents any rotation of the sleeve 14 and allows sliding and backward movement of both sleeves together until the sleeve 14 disengages from the hooking element 10 ; locking in this case is not effected by bunching up the spring, but simply by unscrewing the outer sleeve 19 to draw it away axially from the inner sleeve 14 until its end bears against an annular shoulder 25 on the lever 12 which thereby prevents further sliding of the two sleeves and the disengagement of the snaphook lever. In the case of figure 6, too, the positioning of the two sleeves can be reversed and locking of the lever 12 can be effected by engaging one of the sleeves with either of the ends 16 or 13 of the hooking element 10. In all cases it is therefore clear that a double safety system has been provided which comprises a first sliding sleeve for locking the snaphook lever, which can automatically engage with one of the ends of the hooking element 10, and a second stop sleeve for locking the axial sliding movement of the above-mentioned sliding sleeve.

## Claims

1. A snaphook comprising a hooking element (10) in the form of an open link having opposed ends, a closing lever (12) pivoted at one end (16) of the above-mentioned hooking element (10), and locking means for the lever, said locking means comprising a locking sleeve (14) on the lever (12), slidingly engaging and disengaging one end of said hooking element (10) and a biasing spring to urge said locking sleeve (14) in the engaged condition characterized in that a second stop sleeve (19) is provided for stopping said locking sleeve (14) in said engaged condition, said stop sleeve (19) being coaxially arranged on said lever (12), said stop sleeve (19) being rotatably supported and axially movable from a first operative condition in which prevent the disengagement of said locking sleeve (14) from said hooking element (10), to a second operative condition in which allows the disengagement, and screw thread means (19a-12a) on said stop sleeve (19) and closing lever or boeking sleeve (14) to move said stop sleeve (19) between said first and second operative conditions.

2. A snaphook as claimed in claim 1, characterized by the fact that said locking sleeve (14) can slide on the lever (12) and is subject to the thrust action of a thrust spring (17) between a first operative position for releasing the lever (12) and a second operative position in which the locking sleeve (14) engages with one end (16) of the snaphook element (10) and by the fact that the stop sleeve (19) in its turn can be screwed between a condition in which it leaves the locking sleeve (14) free to slide and a condition in which it stops the above-mentioned locking sleeve (14).

3. A snaphook as claimed in claim 1, characterized by the fact that the locking sleeve (14) is positioned outside of the stop sleeve (19).

4. A snaphook as claimed in claim 1, characterized by the fact that the locking sleeve (14) is positioned inside of the stop sleeve (19).

5. A snaphook as claimed in any of the previous claims, characterized by the fact that the thrust spring (17) for the locking sleeve (14) is positioned inside one of the above stated sleeves (14, 19).

6. A snaphook as claimed in any of the previous claims, charactrized by the fact that the stop sleeve (19) has an internal threaded portion (19a) that can screw onto the threaded section (12a) of the snaphook lever (12).

7. A snaphook as claimed in claim 6, characterized by the fact that the snaphook lever (12) is provided with means (20) for stopping the stop sleeve (19) in the direction of the end (13) of the hooking element (10) that engages with the locking sleeve (14).

8. A snaphook as claimed in claim 1, characterized by the fact that the stop sleeve (19) has a bell-shaped front end (19b) that engages with and disengages from one end (13) of the hooking element (10).

9. A snaphook as claimed in any of the preceding claims, characterized by the fact that the locking sleeve (14) and the stop sleeve (19) have reciprocal engaging means (21) for mutually transmitting rotary motion.

10. A snaphook as claimed in any of the preceding claims characterized by the fact that the stop sleeve (19) has a thread portion (19a) which can engage with a corresponding opposed thread portion of the locking sleeve (14) and by the fact that the snaphook lever (12) has a shoulder means (25) for stopping the two sleeves, in an opposite position to the said sliding locking sleeve (14).

## Ansprüche

1. Ein Karabinerhaken mit Hakenelement (10) in der Form eines offenen Kettenglieds, dessen Enden sich gegenüberliegen, ein Verschlußhebel (1-2), der mit einem Ende (16) des obengenannten Hakenelements (10) drehpunktig verbunden ist, und eine Sperrvorrichtung für den Verschlußhebel, wobei die besagte Sperrvorrichtung eine Sperrhülse (14) am Hebel (12) umfaßt, die gleitend bei einem Ende des besagten Hakenelements (10) einrückt und ausrückt, sowie eine Vorspannfeder, um besagte Sperrhülse (14) im eingerückten Zustand zu halten, gekennzeichnet dadurch, daß eine zweite Arretierhülse (19) vorgesehen ist, um die besagte Sperrhülse (14) im besagten eingerückten Zustand zu arretieren, wobei die besagte Arretierhülse (19) koaxial an besagtem Hebel (12) angebracht ist, während die besagte Arretierhülse (19) drehbar gelagert und axial verstellbar ist aus einer ersten Arbeitsbedingung, in welcher sie das Ausrükken der besagten Sperrhülse (14) aus dem besagten Hakenelement (10) verhindert, in eine zweite Arbeitsbedingung, in welcher sie das Ausrücken erlaubt, sowie Schraubgewindevorrichtungen (19a, 12a) an besagter Arretierhülse (19) und am Verschlußhebel (12) oder an der Sperrhülse (14), um die besagte Arretierhülse (19) zwischen der besagten ersten und zweiten Arbeitsbedingung zu verstellen.

2. Ein Karabinerhaken wie unter Patentanspruch 1 beschrieben, gekennzeichnet durch den Umstand, daß die besagte Sperrhülse (14) auf dem Hebel (12) zu gleiten vermag und der Schubwirkung einer Schubfeder (17) ausgesetzt ist, zwischen einer ersten Arbeitsstellung zur Freigabe des Hebels (12) und einer zweiten Arbeitsstellung, in welcher die Sperrhülse (14) bei einem Ende (16) des Karabinerhaken Elements (10) einrückt, und durch den Umstand, daß die Sperrhülse (19) bei ihrer Drehung durch Schrauben zwischen einem Zustand, in dem sie den Verschlußhebel (14) frei läßt zum Gleiten, und einem Zustand, in dem sie die obengenannte Sperrhülse (14) arretiert, verstellt werden kann.

3. Ein Karabinerhaken wie unter Patentanspruch 1 beschrieben, gekennzeichnet durch den Umstand, daß die besagte Sperrhülse (14) außerhalb der Arretierhülse (19) positioniert ist.

4. Ein Karabinerhaken wie unter Patentanspruch 1 beschrieben, gekennzeichnet durch den Umstand, daß die Sperrhülse (14) innerhalb der Arretierhülse (19) positioniert ist.

5. Ein Karabinerhaken wie unter einem beliebigen der vorstehenden Patentansprüche beschrieben, gekennzeichnet durch den Umstand, daß die Schubfeder (17) für die Sperrhülse (14) innerhalb einer der obengenannten Hülsen (14, 19) positioniert ist.

6. Ein Karabinerhaken wie unter einem beliebigen der vorstehenden Patentansprüche beschrieben, gekennzeichnet durch den Umstand, daß die Arretierhülse (19) einen inneren Gewindeteil aufweist (19a), der auf den Gewindeabschnitt (12a) des Karabinerhaken-Hebels (12) geschraubt werden kann.

7. Ein Karabinerhaken wie unter Patentanspruch 6 beschrieben, gekennzeichnet durch den Umstand, daß der Karabinerhaken-Hebel (12) mit einer Vorrichtung (20) zum Arretieren der Arretierhülse (19) in der Richtung des Endes (13) des Hakenelements (10) versehen ist, das in die Sperrhülse (14) eingreift.

8. Ein Karabinerhaken wie unter Patentanspruch 1 beschrieben, gekennzeichnet durch den Umstand, daß die Arretierhülse (19) ein glockenförmiges Vorderende (19b) besitzt, das bei einem Ende (13) des Hakenelements (10) einund ausrückt.

9. Ein Karabinerhaken wie unter einem beliebigen der vorstehenden Patentansprüche beschrieben, gekennzeichnet durch den Umstand, daß die Sperrhülse (14) und die Arretierhülse (19) gegenseitig eingreifende Vorrichtungen (21) besitzen, um sich wechselseitig Drehbewegung zu übertragen.

10. Ein Karabinerhaken wie unter einem beliebigen der vorstehenden Patentansprüche beschrieben, gekennzeichnet durch den Umstand, daß die Arretierhülse (19) einen Gewindeabschnitt aufweist (19a), der in einen entsprechenden gegenüberliegenden Gewindeabschnitt bei der Sperrhülse (14) einzugreifen vermag, und durch den Umstand, daß der Karabinerhaken-Hebel (12) eine vorspringende Vorrichtung (25) aufweist, die zum Arretieren der beiden Hülsen dient, in einer der besagten Gleit-Sperrhülse (14) gegenüberliegenden Stellung.

## Revendications

1. Mousqueton comprenant : un crochet (10) sous la forme d'un anneau ouvert muni à ses extrémités d'un levier de blocage (12) qui pivote à une extrémité (16) dudit crochet (10) ; des moyens de verrouillage pour le levier, ces moyens incluant un manchon de verrouillage (14) sur le levier (12), qui est en prise par coulissement avec le crochet (10) et se désengage de ce dernier à une extrémité, ainsi qu'un ressort de décentrage pour pousser le manchon de verrouillage (14) dans la position d'engagement, le mousqueton étant caractérisé en ce que un second manchon de blocage (19) est prévu pour verrouiller le manchon (14) dans ladite position d'engagement, ce manchon (19) étant disposé coaxialement sur ledit levier (12) et se trouvant supporté en rotation et axialement déplaçable entre une première position empêchant le désengagement dudit manchon de verrouillage (14) dudit crochet (10) et une seconde position autorisant ce désengagement, et en ce que des moyens de type pas de vis (19a, 12a) sont prévus sur ledit manchon de blocage (19) et le levier de blocage (12) ou le manchon de verrouillage (14) pour faire déplacer le manchon de blocage (19) entre la première et la seconde position de travail.

2. Mousqueton selon la revendication 1, caractérisé en ce que ledit manchon de verrouillage (14) peut coulisser sur le levier (12) et se trouve soumis à la poussée d'un ressort de butée (17) entre une première position de travail destiné à libérer le levier (12) et une seconde position de travail où le manchon de verrouillage (14) est en prise avec une extrémité (16) du crochet de mousqueton (10) ; et en ce que le manchon de blocage (19) peut à son tour être vissé entre une position où il autorise le coulissement libre du manchon de verrouillage (14) et une position où il bloque ce dernier (14).

3. Mousqueton selon la revendication 1, caractérisé en ce que le manchon de verrouillage (14) est positionné à l'extérieur du manchon de blocage (19).

4. Mousqueton selon la revendication 1, caractérisé en ce que le manchon de verrouillage (14) est positionné à l'intérieur du manchon de blocage (19).

5. Mousqueton selon l'une quelconque des revendications précédentes, caractérisé en ce que le ressort de butée (17) pour le manchon de verrouillage (14) est positionné à l'intérieur de l'un desdits manchons (14,19).

6. Mousqueton selon l'une quelconque des revendications précédentes caractérisé en ce que le manchon de blocage (19) possède un filetage interne (19a) qui permet le vissage sur la section filetée (12a) du levier de mousqueton (12).

7. Mousqueton selon la revendication 6, caractérisé en ce que le levier de mousqueton (12) est muni de moyens (20) permettant d'arrêter le manchon de blocage (19) dans la direction de l'extrémité (13) du crochet (10) qui est en prise avec le manchon du verrouillage (14).

8. Mousqueton selon la revendication 1, caractérisé en ce que le manchon de blocage (19) a une extrémité avant (19b), en forme de tulipe, prévu pour s'accoupler et se désaccoupler d'une extrémité (13) du crochet (10).

9. Mousqueton selon l'une quelconque des revendications précédentes, caractérisé en ce que le manchon de verrouillage (14) et le manchon de blocage (19) sont munis de moyens (21) d'engagements mutuels pour transmettre le mouvement de rotation.

10. Mousqueton selon l'une quelconque des revendications précédentes, caractérisé en ce que le manchon de blocage (19) possède une partie filetée (19a) qui peut engrèner avec une partie filetée correspondante opposée du manchon de verrouillage (14) et en ce que le levier de mousqueton (12) est muni de moyens à épaulement (25) destinés à bloquer les deux manchons, dans une position opposée audit manchon coulissant de verrouillage (14).

Fig. 1

Fig. 2

Fig. 3

Fig. 4

Fig. 5

Fig. 6